# EUROPEAN PATENT APPLICATION

(11) **EP 1 935 760 A1**
(43) Date of publication of application: **25.06.2008**
(21) Application number: 06126349.7
(22) Date of filing: 18.12.2006
(51) Int. Cl.: B62D 25/04

(54) **Pillar for a vehicle body structure**

(71) Applicant: Ford Global Technologies, LLC, Dearborn, MI 48126 (US)
(72) Inventor: Hilmarsson, Styrmir, Ture, 417 28 Göteborg (SE); Lindahl, Per, 437 35 Lindome (SE); Bergwall, Mattias, 423 38 Torslanda (SE); Appelgren, Anders, 422 50 Hisings Backa (SE); Nedic, Stevan, 416 70 Göteborg (SE); Johansson, Fredrik, 283 91 Osby (SE); Trana, Kristoffer, 291 54 Kristianstad (SE)
(74) Representative: Valea AB

(57) **Abstract**

The present invention relates to a pillar (10) for a vehicle body structure, comprising a first (12) and a second (14) panel. The first panel (12) comprises an outward portion which constitutes at least a part of an outside of the pillar (10) and a first flanged portion (18). The second panel (14) comprising a window pane attachment portion (22) adapted to receive a means (24) for attachment of a window pane and a second flanged portion (28). Furthermore, the first (18) and the second (28) flanged portions are attached to one another by a continuous joint (32), at which joint the first flanged portion (18) extends in a first plane (34) and the second portion (28) extends in a second plane (36). According to the invention, the first plane (34) and the second plane (36) are substantially parallel and the second flanged portion (28) forms an extension of the first flanged portion (18).

## Description

### TECHNICAL FIELD

The present invention relates to a pillar for a vehicle body structure, the pillar comprising a first and a second panel. The first panel comprises an outward portion which constitutes at least a part of an outside of the pillar and a first flanged portion wherein a transition from the outward portion to the first flanged portion occurs in a first intermediate portion. The second panel comprises a window pane attachment portion adapted to receive a means for attachment of a window pane and a second flanged portion wherein a transition from the window pane attachment portion to the second flanged portion occurs in a second intermediate portion. Furthermore, the first and the second flanged portions are attached to one another by a continuous joint, at which joint the first flanged portion extends in a first plane and the second portion extends in a second plane.

The invention further relates to a method of manufacturing a pillar for a vehicle body structure.

### BACKGROUND OF THE INVENTION

Vehicles, particularly cars, of today, generally comprise a plurality of pillars extending from the roof to the main body of the vehicle. In order not to obscure the visibility for occupants of the vehicle, particularly the driver, the pillars are preferably made as narrow as possible while still maintaining required structural characteristics. These features are of specific interest for the foremost and rearmost pillars of a vehicle, which pillars in cars of a sedan type often are referred to as A-pillars and C-pillars, respectively.

The outer part of a pillar is preferably manufactured from a single blank in order to obtain requisite structural characteristics and an aesthetic appearance. However, in addition to allowing good visibility and providing adequate structural characteristics to the vehicle, a pillar is generally provided with at least one flange for attachment of, or sealing for, a window pane. These requirements of the outer part of the pillar taken together result in an outer part with a relatively complex design, which is generally difficult to stamp from one single blank.

Prior art attempts to solve the aforementioned problem in different ways. For example, US Patent No. 5 810 428 teaches that a single blank may be stamped, resulting in a pillar which comprises an outer portion and an attachment portion for a window pane, wherein the outer portion and the attachment portion are connected to one another by an intermediate portion. The intermediate portion is inclined with respect to the transversal extension of the outer portion as well as the attachment portion at proportionately wide angles, i.e. the distance between the outer portion and the attachment portion in the transversal extension is greater than the distance normal to the transversal extension. This enables the outer part of the pillar to be stamped from a single blank, but on the other hand introduces limitations to possible designs of the outer pillar.

Moreover, US Patent No. 5 056 850 teaches that the outer portion may in fact be manufactured from a separate component, such as a molding assembly, and that the attachment flange may form a part of an internal pillar. However, providing the outer portion and the attachment flange as separate components introduces new problems, such as the procurement and additional mounting step of the molding assembly.

### SUMMARY OF THE INVENTION

A first object of the invention is to provide a pillar for a vehicle body structure, comprising an outward portion and window pane attachment portion, wherein the pillar is simple to manufacture.

A second object of the invention is to provide a pillar for a vehicle body structure, which provides appropriate structural characteristics.

A third object of the invention is to provide a pillar for a vehicle body structure, which does not require any sealing member, such as a plastic trim, outside of a window pane which may be attached to the pillar.

A fourth object of the invention is to provide a pillar for a vehicle body structure, which has an aesthetic appearance and is sufficiently narrow in order not to excessively obscure the view of occupants, in particular the driver, of a vehicle equipped with the pillar.

At least one of the aforementioned objects is achieved by a pillar as claimed in appended claim 1.

Thus, the invention relates to a pillar for a vehicle body structure, comprising a first and a second panel, the first panel comprises an outward portion, which constitutes at least a part of an outside of the pillar, and a first flanged portion. A transition from the outward portion to the first flanged portion occurs in a first intermediate portion. The second panel comprises a window pane attachment portion adapted to receive a means for attachment of a window pane and a second flanged portion wherein a transition from the window pane attachment portion to the second flanged portion occurs in a second intermediate portion. The first and the second flanged portions are attached to one another by a continuous joint, at which joint the first flanged portion extends in a first plane and the second portion extends in a second plane. According to the invention, the first plane and the second plane are substantially parallel and the second flanged portion forms an extension of the first flanged portion.

Using a pillar for a vehicle body structure pursuant to the invention, a tight joint is obtained between the outward portion and the window pane attachment portion which will have appearance and characteristics similar to a pillar manufactured from one blank, e.g. by means of stamping. However, since the two panels are shaped individually and subsequently joined to one another, a greater flexibility of possible designs of the pillar is obtained.

As used herein, the expression "pillar" relates to any elongate structural component for use in a vehicle body structure, which will extend from the main portion thereof in a direction at least partially vertically and connecting with a second structural component at the end of the pillar which is distal to the main portion. The second structural component is generally a roof structure or a substantially horizontally extending beam.

According to a preferred embodiment of the invention, the first and the second flanged portions are in a substantially overlapping relationship at the location of the joint. This may result in a more durable joint, as well as allowing for a proper alignment of the two panels. As may be appreciated of a person skilled in the art, manufacturing the pillar from two separate panels may result in an initial misalignment of the assembly due to manufacturing tolerances of at least one of the panels and this initial misalignment may easily be corrected when the aforementioned flanged portions are in a substantially overlapping relationship.

According to another embodiment of the invention, the window pane attachment portion extends in a third plane, wherein a relative angle between the second and the third plane is in a range of 30 - 150 °, preferably in a range of 80 - 145°, most preferably in a range of 90 - 135°. Arranging the relative angle in any one of the aforementioned ranges provides for a pillar which is appropriately narrow but nevertheless may provide for expedient features of the pillar, such as providing for runoff of rain water on the window pane.

According to a further embodiment of the invention, the first and the second flanged portions are joined to one another by means of a brazed or soldered joint. By utilizing a brazed or soldered joint, both panels of the pillar can retain their original physical properties after the brazing or soldering since less heat is required than for welding for example. A brazed or soldered joint also generally provides a good appearance without a need of time-consuming finishing operations, which is important since the attachment area of the two panels of the pillar is in the field of vision of a person close to a vehicle comprising the pillar of the invention.

According to another embodiment of the invention, the first flanged portion comprises a first edge portion, wherein a smallest distance from the first intermediate portion to the first edge portion is less than 30 mm, preferably less that 20 mm.

According to a further embodiment of the invention, the second flanged portion comprises a second edge portion and a smallest distance from the second intermediate portion to the second edge portion is less than 30 mm, preferably less that 20 mm.

According to another embodiment of the invention, the window pane attachment portion comprises a third edge portion and a smallest distance from the second intermediate portion to the third edge portion is less than 35 mm, preferably less that 25 mm. By arranging the distance in any of the aforementioned ranges, a minimal obscuration of the view of occupants of a vehicle comprising the pillar of the invention is obtained, while still providing a sufficient attachment area for the window pane.

According to a further embodiment of the invention, the means for attachment is an adhesive for attachment on the inside of the window pane. An adhesive will allow the window pane to be tightly attached to the pillar without any use of circumstantial attachment operations.

According to another embodiment of the invention, the pillar is a front pillar, also denoted A-pillar.

According to a further embodiment of the invention, the continuous joint is a joggled joint. By utilizing a joggled joint, the first and second flanged portions may form a surface which is substantially flat, which may be preferred from an aesthetic point of view.

The invention further relates to a vehicle body structure, comprising a pillar according the invention.

The invention further relates to a vehicle, comprising the aforesaid vehicle body structure.

A fifth object of the invention is to provide a method for manufacturing a pillar for a vehicle body structure, which method is simple to carry out and which will result in a pillar with requisite characteristics.

This fifth object is achieved by attachment method defined in the attached claim 12.

Thus, the method according to the invention relates to a method of manufacturing a pillar for a vehicle body structure, wherein the pillar comprises a first and a second panel. The first panel comprises an outward portion which constitutes at least a part of an outside of the pillar and a first flanged portion. The second panel comprises a window pane attachment portion adapted to receive a means for attachment of a window pane and a second flanged portion. The second flanged portion forms an extension of the first flanged portion. According to the invention, the method comprises the steps of:
- stamping the first panel from a first blank;
- stamping the second panel from a second blank, and
- joining the first and second panels along the first and second flanged portions by means of a continuous joint.

By adopting the method as described above, an efficient method of providing pillars which are sufficient from both a structural and non-obscuring point of view and also provides a tight pillar, i.e. a pillar which will not admit fluid, such as water or air, passing through the pillar.

According to a preferred embodiment of the method of the invention, joining of the first and second panels further comprises the steps of:
- fixating the first panel by means of a first fixture;
- applying a pressure to at least the second flanged portion in a direction towards the first flanged portion, and
- joining the first flanged portion to the second flanged portion by means of a continuous joint.

Utilizing the aforementioned embodiment of the invention, an appropriate alignment of the two panels is ensured prior to the joining of the same.

As used herein, the expression "fixture" relates to any retention means which is adapted to releasably retain a member during a machining procedure, for instance a joining procedure, involving the aforesaid member.

According to a further embodiment of the method of the invention, the pressure is applied to the second flanged portion by means of a second fixture. Optionally, the pressure may applied to the second flanged portion means of a pressure roll.

According to another embodiment of the method of the invention, joining of the first and second panels comprises the steps of:
- fixating the second panel by means of a fixture;
- applying a pressure to at least the first flanged portion in a direction towards the second flanged portion, and
- joining the first flanged portion to the second flanged portion by means of a continuous joint.

According to a further embodiment of the method of the invention, the pressure is applied to the first flanged portion by means of a pressure roll.

According to a further embodiment of the method of the invention, the first flanged portion is attached to the second flanged portion by means of brazing or soldering. The benefits of using brazing or soldering have been previously discussed and are thus not further elaborated on here.

According to another embodiment of the invention, the first flanged portion is attached to the second flanged portion by means of laser brazing.

According to a further embodiment of the method of the invention, at least a portion of the second flanged portion is obtained by joggling of a portion the first and/or second blank.

### BRIEF DESCRIPTION OF THE DRAWINGS

The present invention will hereinafter be further explained by means of non-limiting examples with reference to the appended figures wherein:
Fig. 1 is a cross-sectional view of a portion of pillar according to an embodiment of the present invention;
Fig. 2 is a cross-sectional view of a portion of pillar according to another embodiment of the present invention;
Fig. 3 is a cross-sectional view of a portion of pillar according to a further embodiment of the present invention;
Fig. 4 is a cross-sectional view illustrating an embodiment of the method of the invention of manufacturing a pillar, and
Fig. 5 is a cross-sectional view illustrating another embodiment of the method of the invention.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims.

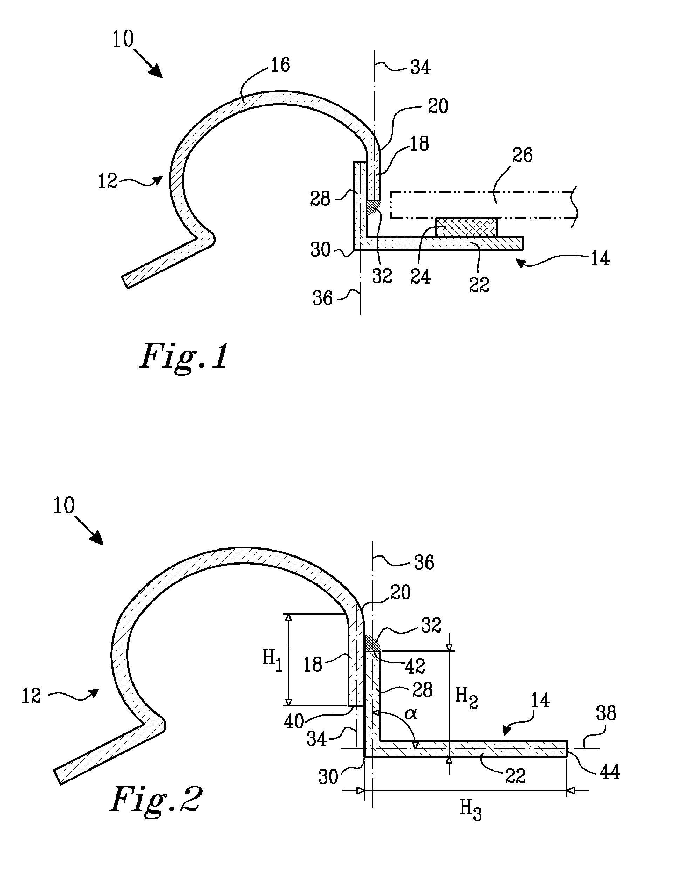

Fig. 1 illustrates a cross-sectional view of an embodiment of the pillar 10 of the invention. The pillar 10 is intended to be used in a vehicle body structure (not shown). The pillar 10 comprises a first 12 and a second 14 panel. The first panel 12 comprises an outward portion 16, which constitutes at least a part of an outside of the pillar 10. The first panel 12 further comprises a first flanged portion 18 wherein a transition from the outward portion 16 to the first flanged portion 18 occurs in a first intermediate portion 20. The second panel 14 comprises a window pane attachment portion 22 adapted to receive a means 24 for attachment of a window pane 26, which window pane 26 in Fig. 1 is illustrated by a dotted line.

The means 24 for attachment of the window pane 26 is in Fig. 1 illustrated as an adhesive for attachment on the inside of the window pane 26, which adhesive extends substantially throughout the length of the pillar 10, which is a preferred implementation of the attachment means 24. However, the attachment means 24 may comprise a plurality of adhesive joints. Optionally, other attachment means may of course be used, such as snap-on connections, screw joints, etcetera.

The second panel further comprises a second flanged portion 28 wherein a transition from the window pane attachment portion 22 to the second flanged portion 28 occurs in a second intermediate portion 30. As may be gleaned from Fig. 1, the first and the second flanged portions 18, 28 are attached to one another by a continuous joint 32, at which joint 32 the first flanged portion 18 extends in a first plane 34 and the second portion 28 extends in a second plane 36. As further illustrated by Fig. 1 and in accordance with the invention, the first plane 34 and the second plane 36 are substantially parallel and the second flanged portion 28 forms an extension of the first flanged portion 18.

The joint 32 could be formed such that the first and second flanged portions 18, 28 each terminate at the joint 32, i.e. forming a butt joint. However, as illustrated in Fig. 1, in a preferred embodiment of the invention, the first and the second flanged portions 18, 28 are in a substantially overlapping relationship at the location of the joint 32.

In Fig. 1, the first flanged portion 18 is arranged outside of the second flanged portion 28. Optionally, and as illustrated in Fig. 2, the relation may be the opposite and the second flanged portion 28 may be arranged outside of the first flanged portion 18. Fig. 2 also illustrates a third plane, denoted by reference numeral 38, in which the window pane attachment portion 22 extends. Fig. 2 further illustrates a preferred angular relationship between the second and third plane 36, 38 namely that the relative angle α between the second 36 and the third 38 plane is in a range of 30 - 150 °, preferably in a range of 80 - 145°, most preferably in a range of 90 - 135°. The relative angle α of the second and third planes 36, 38 in the embodiment of the invention illustrated in Fig. 2 is approximately 90°.

In order to obtain a continuous joint between the first and second flanged portions 18, 28 one of a plurality of joining means may be employed, such as gluing or arc welding. However, in a preferred embodiment of the invention, the first and the second flanged portions 18, 28 are joined to one another by means of a brazed or soldered joint, more preferably a laser brazed joint

As may be gleaned from Fig. 2, the first flanged portion 18 comprises a first edge portion 40. According to a preferred embodiment of the invention, a smallest distance H₁ from the first intermediate portion 20 to the first edge portion 40 is less than 30 mm, preferably less that 20 mm. As further illustrated in Fig .2, the second flanged portion 28 comprises a second edge portion 42 and a smallest distance H₂ from the second intermediate portion 30 to the second edge portion 42 is less than 30 mm, preferably less that 20 mm.

Furthermore, Fig.2 illustrates an embodiment of the invention where the window pane attachment portion 22 comprises a third edge portion 44 and a smallest distance H₃ from the second intermediate portion 30 to the third edge portion 44 is less than 35 mm, preferably less that 25 mm.

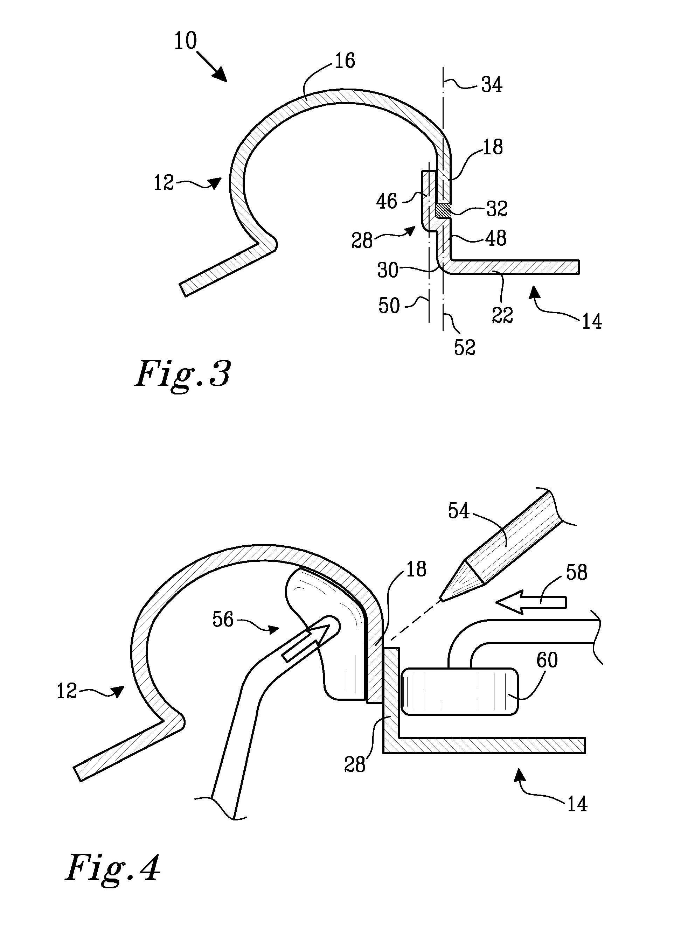

Fig. 3 illustrates a further embodiment of the invention wherein the continuous joint 32 is a joggled joint. As may be gleaned from Fig. 3 the second flanged portion 28 is joggled, resulting in a distal and proximal portion 46, 48, respectively, of the second flanged portion 28, as seen from the second intermediate portion 30. The distal and proximal portions 46, 48 extend in planes 50, 52 which are substantially parallel. This results in a joint wherein the first flanged portion 18 is substantially coplanar with the proximal portion 48. Optionally, the first flanged portion 18 may be joggled instead of the second flanged portion 28. Alternatively, both the flanged portions 18, 28 may be joggled in order to obtain a substantially flat surface in the area of the continuous joint 32. Furthermore, joggling of either of the two flanged portions may result in more than two proximal portions (not shown), depending on the application.

In order to manufacture a pillar from a first and second panel utilizing the method of the present invention, the first and second panels are firstly shaped by means of stamping and subsequently assembled. Assembly of the pillar 10 may be performed in accordance with a method schematically illustrated in Fig. 4, wherein the first and second panels 12, 14 are joined to one another along the first and second flanged portions 18, 28 by means of a continuous joint 32. The joint is preferably a soldered or brazed joint, preferably a laser brazed joint. Thus, as illustrated in Fig. 4, the attachment means 54 applied to the location of the continuous joint preferably comprises a brazing solder and a laser beam.

As further illustrated in Fig. 4, a preferred embodiment of the method of the invention comprises the steps of: fixating the first panel 12 by means of a first fixture 56, applying a pressure to at least the second flanged portion 28 in a direction 58 towards the first flanged portion 18, and joining the first flanged portion 18 to the second flanged portion 28 by means of a continuous joint 32. Fig. 4 further illustrates a pressure roll 60, by which the pressure in one embodiment of the invention may be applied to the second flanged portion 28.

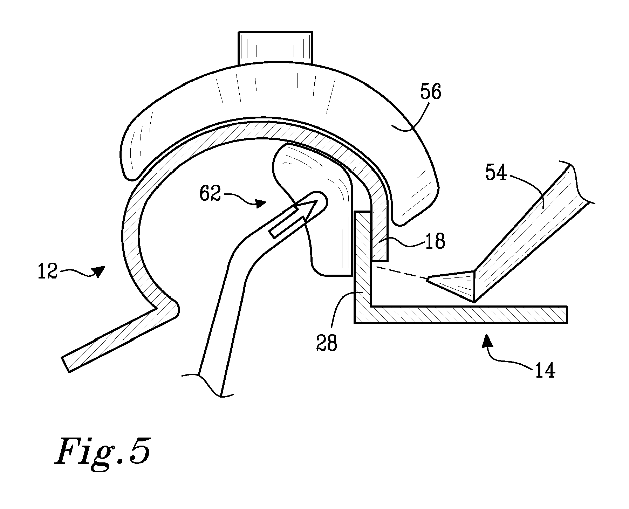

As may be gleaned from Fig. 4, the first fixture 56 may be inserted inside of the first panel 12. However, in some applications, it may be preferable to arrange the first fixture 56 on the outside of the first panel 12, for example when manufacturing an embodiment of the pillar 10 of the invention similar to the one disclosed in Fig. 5, wherein the first flanged portion 18 is arranged to be located outside of the second flanged portion 28. Obviously, some applications may require that the first fixture 56 comprises at least two sub fixtures (not shown) located on either side of the first panel. Furthermore, as indicated in Fig. 5, the second panel 14 may be held in place by means of a second fixture 62 during the attachment operation. Naturally, instead of the first fixture 56 in Fig. 5, a pressure roll (not shown) may be used for applying a pressure on the first flanged portion 18 in a direction towards the second flanged portion 28.

The method of the invention of manufacturing a pillar 10 may further comprise the step of joggling either of the first and second flanged portions 18, 28.

Further modifications of the invention within the scope of the appended claims are feasible. For instance, the second panel 14 may be provided with a third portion, extending from the end of window pane attachment portion 22 which is distal of the second flanged portion 28.

## Claims

1. A pillar (10) for a vehicle body structure, comprising a first (12) and a second (14) panel, said first panel (12) comprising an outward portion (16), which constitutes at least a part of an outside of said pillar (10), and a first flanged portion (18), wherein a transition from said outward portion (16) to said first flanged portion (18) occurs in a first intermediate portion (20), said second panel (14) comprising a window pane attachment portion (22) adapted to receive a means (24) for attachment of a window pane (26) and a second flanged portion (28), wherein a transition from said window pane attachment portion (22) to said second flanged portion (28) occurs in a second intermediate portion (30), wherein said first and said second flanged portions (18, 28) are attached to one another by a continuous joint (32), at which joint (32) said first flanged portion (18) extends in a first plane (34) and said second portion (28) extends in a second plane (36)
**characterized in that**
said first plane and said second plane (34, 36) are substantially parallel and that said second flanged portion (28) forms an extension of said first flanged portion (18).

2. The pillar (10) according to claim 1, wherein said first and said second flanged portions (18, 28) are in a substantially overlapping relationship at the location of said joint (32).

3. The pillar (10) according to claim 1 or 2, wherein said window pane attachment portion (22) extends in a third plane (38), wherein a relative angle (α) between said second and said third plane (36, 38) is in a range of 30 - 150 °, preferably in a range of 80 - 145°, most preferably in a range of 90 - 135°.

4. The pillar (10) according to any of the preceding claims, wherein said first and said second flanged portions (18, 28) are attached to one another by means of a brazed or soldered joint (32).

5. The pillar (10) according to any of the preceding claims, wherein said first flanged portion (18) comprises a first edge portion (40), wherein a smallest distance (H₁) from said first intermediate portion (20) to said first edge portion (40) is less than 30 mm, preferably less that 20 mm.

6. The pillar (10) according to any of the preceding claims, wherein said second flanged portion (28) comprises a second edge portion (42) and a smallest distance (H₂) from said second intermediate portion (30) to said second edge portion (42) is less than 30 mm, preferably less that 20 mm.

7. The pillar (10) according to any of the preceding claims, wherein said window pane attachment portion (22) comprises a third edge portion (44) and a smallest distance (H₃) from said second intermediate portion (30) to said third edge portion (44) is less than 35 mm, preferably less that 25 mm.

8. The pillar (10) according to any of the preceding claims, wherein said means for attachment (24) is an adhesive for attachment on the inside of a window pane (26).

9. The pillar (10) according to any of the preceding claims, wherein said pillar (10) is a front pillar.

10. The pillar (10) according to any of the preceding claims, wherein said continuous joint (32) is a joggled joint.

11. A vehicle body structure, comprising a pillar (10) according to any one of the preceding claims.

12. A vehicle, a vehicle body structure according to claim 11.

13. A method of manufacturing a pillar (10) for a vehicle body structure, said pillar (10) comprising a first and a second panel (12, 14), said first panel (12) comprising an outward (16) portion which constitutes at least a part of an outside of said pillar (10) and a first flanged portion (18), said second panel (14) comprising a window pane attachment portion (22) adapted to receive a means (24) for attachment of a window pane (26) and a second flanged portion (28), wherein said second flanged portion (28) forms an extension of said first flanged portion (18), wherein said method comprises the steps of:
- stamping said first panel (12) from a first blank;
- stamping said second panel (14) from a second blank, and
- joining said first and second panels (12, 14) along said first and second flanged portions (18, 28) by means of a continuous joint (32).

14. The method according to claim 13, wherein joining said first and second panels (12, 14) further comprises the steps of:
- fixating said first panel (12) by means of a first fixture (56);
- applying a pressure to at least said second flanged portion (28) in a direction (58) towards said first flanged portion (18), and
- joining said first flanged portion (18) to said second flanged portion (28) by means of a continuous joint (32).

15. The method according to claim 14, wherein said pressure is applied to said second flanged portion (28) by means of a second fixture (62).

16. The method according to claim 15, wherein said pressure is applied to said second flanged portion (28) by means of a pressure roll (60).

17. The method according to claim 13, wherein joining said first and second panels (12, 14) further comprises the steps of:
- fixating said second panel (14) by means of a fixture (62);
- applying a pressure to at least said first flanged portion (18) in a direction (58) towards said second flanged portion (28), and
- joining said first flanged portion (18) to said second flanged portion (28) by means of a continuous joint (32).

18. The method according to claim 17, wherein said pressure is applied to said first flanged portion (18) by means of a pressure roll (60).

19. The method according to any one of claims 13 to 18, wherein said first flanged portion (18) is joined to said second flanged portion (28) by means of brazing or soldering.

20. The method according to any one of claims 19, wherein said first flanged portion (18) is joined to said second flanged portion (28) by means of laser brazing.

21. The method according to any one of claims claim 13 to 20, wherein at least a portion of said second flanged portion (28) is obtained by joggling of a portion said second blank (14).

22. The method according to any one of claims claim 13 to 21, wherein at least a portion of said first flanged portion (18) is obtained by joggling of a portion of said first blank (12).
